# EUROPÄISCHE PATENTSCHRIFT

(11) **EP 2 495 520 B1**
(45) Veröffentlichungstag und Bekanntmachung des Hinweises auf die Patenterteilung: **10.12.2014**
(21) Anmeldenummer: 11156684.0
(22) Anmeldetag: 02.03.2011
(51) Int. Cl.: F27B 17/02

(54) **Dentalbrenn- oder -pressofen**
Dental kiln or press furnace
Four dentaire de cuisson ou de matriçage

(43) Veröffentlichungstag der Anmeldung: 05.09.2012
(73) Patentinhaber: Ivoclar Vivadent AG, 9494 Schaan (LI)
(72) Erfinder: Jussel, Rudolf, Dipl.-Ing. FH, 6805 Feldkirch-Gisingen (AT)
(74) Vertreter: Baronetzky, Klaus

(56) Entgegenhaltungen:
- EP-A1- 2 452 651
- EP-A2- 0 795 303
- DE-A1- 10 325 524
- DE-C- 853 793
- DE-C- 860 989
- DE-C- 871 817
- DE-C1- 4 433 159

## Beschreibung

Die Erfindung betrifft einen Dental-Brenn- oder -Pressofen, gemäß Oberbegriff von Anspruch 1 sowie ein Verfahren zum Betreiben eines Dental-Brennofens oder -Pressofens, gemäß dem Oberbegriff von Anspruch 13.

Brennöfen und Pressöfen für Dentalrestaurationen werden verwendet, um die Dentalrestaurationen, die meist aus Glaskeramiken bestehen, einer Wärmebehandlung zu unterziehen um einem gebrauchsfertigen Zustand des Dentalrestaurationsteils zu erreichen. Für Wärmebehandlung in Brenn- und Pressöfen sind Temperaturen bis zu 1200°C erforderlich.

Die Qualität des hergestellten Dentalrestaurationsteils hängt in starkem Maße von dem Temperaturverlauf und der Temperaturverteilung im Dentalofen während des Brennens und/oder Pressens der Dentalkeramik ab. Werden die Temperaturgradienten während des Brenn- oder Pressvorgangs im dentalen Restaurationsteil während der Wärmebehandlung zu groß, sinkt die Qualität des erzeugten Produktes. Dies kann unter Umständen sogar zu einem fehlerhaften Ergebnis führen, was wiederum bedeutet, dass die vorhin investierte Arbeit des Zahntechnikers von mehreren Stunden verloren ist. Zudem schränken die vorhandenen Temperaturgradienten in einem dentalen Ofen die Möglichkeiten des Zahntechnikers ein, und/oder reduzieren die Robustheit des Prozesses.

Die betreffende Auswahl und Einstellung der optimalen Parameter, aber auch die Eibringung des dentalen Restaurationsteil in den Brennofen oder den Pressofen, d.h. z.B. Art des Brenngutträgers oder Position der dentalen Objekte auf diesem während des Wärmebehandlungsprozesses oder aber die Objektpositionen in einer Pressmuffel, ist regelmä-βig in das Belieben des Zahntechnikers gestellt und stark erfahrungsabhängig. Grundsätzlich führen die vorhin genannten Temperaturgradienten innerhalb der dentalen Brennkammern, insbesondere bei kurzen und schnellen Wärmebehandlungsprozessen, zu sehr vielen teilweise schwer lösbaren Konfliktsituationen. Dies ist umso mehr der Fall, wenn mehrgliedrige Brücken und dergleichen oder eine Mehrzahl von kleinen Dentalrestaurationen zusammen, gleichzeitig einer Wärmebehandlung unterzogen werden.

Insbesondere in Pressmuffeln wird dem Zahntechniker über eine Anstiftlehre für die Anbringung der Wachsteile in einer Pressmuffel vorgegeben, wie weit an den Rand und wie weit in das Zentrum die Objekte angestiftet werden. Diese Limitierung vermindert die Möglichkeiten und auch die Anzahl der gleichzeitig verpressbaren Einheiten oder aber die Prozesszeiten müssen generell und deutlich verlängert werden.

Ferner ist es gemäß der DE 199 05 666 A1 vorgeschlagen worden, zur Vermeidung von kalten Flächen in dem Brennraum und zur gleichförmigen Beheizung in der gesamten Heizkammer ein unteres Heizelement zusätzlich zu einem seitlichen Heizelement vorzusehen. Über Gluarzabdeckungen soll eine weitere Vergleichmäßigung der Warmeabstrahlung und zugleich ein Schutz erzielt werden. Ein derartiges unteres Heizelement bedingt jedoch einen gravierenden Zusatzaufwand, denn typischerweise sind Brennöfen als Haubenöfen ausgebildet, bei denen die elektrische Widerstandsheizung in der Haube vorgesehen ist, während der Boden des Brennofens frei von elektrischen Anschlüssen ist. Auch aus Sicherheitsgründen ist es nicht verwunderlich, dass sich ein derartiger Ofen nicht durchgesetzt hat, denn das Bereitstellen von zusätzlichen Heizelementen im Boden des Brennraums erfordert es auch, dass eine absolut sichere Kapselung des dortigen Heizelements vorgenommen werden muss, die wiederum die Wärmeübertragung behindert.

Typischerweise wird nämlich der Brennraumboden durch Ablagerungen stark verunreinigt, die in den Boden einbrennen. Daher muss mit intensiven Reinigungsmitteln dafür Sorge getragen werden, dass der Boden gesäubert wird, was auch die Zuhilfenahme von Feuchtigkeit wie Wasser bedingt. Bei einem eine feuerfeste Keramikplatte aufweisenden Ofen ist es unkritisch, diese unter Wasser zu setzen, was jedoch nicht gilt, wenn sich darunter elektrische Anschlüsse befinden.

Die insofern bestehenden Abläufe in Dentallabors müssten geändert werden, und es müsste eine zusätzlich Sondervorschrift für derartige Öfen in die Praxis umgesetzt werden.

Die genannte Druckschrift schlägt zwar vor, für den Boden des Brennraums eine Isolationsplatte zu verwenden. Dies ist jedoch aus thermischen Gründen ungünstig, denn die Wärmeübertragung von dem unteren Heizelement in den Brennraum wird dadurch beeinträchtigt.

Das Dokument DE 853 793 B zeigt einen Ofen, insbesondere für zahntechnische Zwecke, welcher eine feststehend bzw. dreh-, kipp- oder schwenkbar angeordnete Ofenkammer an Stelle von Eisenrosten, einzelnen Roststäben usw. mit einer hochfeuerfesten Glühplatte von großer Wärmeleitfählgkeit aus Siliziumkarbid, Schamotte oder sonst einem geeigneten wärmeleitfähigen Werkstoff als Wärmespeicher für vorzuwärmende bzw. zu glühende Gießformen aufweist.

Das Dokument DE 103 25 524 A1 zeigt einen Brenngutträger für dentalkeramischen Zahnersatz mit einer unter Wärmezuführung formstabilen Trägerplatte, die eine Vielzahl von senkrecht zur Trägerplattenoberfläche angeordnete Druchgangskanäle aufweist. In jeden der Durchgangskanäle kann ein Bündel bestehend aus mehreren sich im unverformten Zustand parallel zueinander erstreckenden Stiften zur Aufstellung des zu brennenden Zahnersatzes eingebracht sein.

Das Dokument EP 0 795 303 A2 zeigt eine Gießvorrichtung mit einem Gehäuse, welches eine Gießkammer mit einer offenen Vorderseite definiert, welche mit einem Verschluss ausgerüstet ist, und ferner einen in der Kammer anordenbaren Tiegel aufweist, um zu gießendes Material zu halten.

Das Dokument EP 2 452 651 A1 zeigt einen Ofen, insbesondere einen Dentalofen, mit einer Heizkammer, in welchem wärmezubehandelnde, insbesondere mehrgliedrige Dentalrestaurationsteile einbringbar sind. Der Dentalofen wird mit einer thermischen Heizung versehen, die über Wärmeleitung, Wärmekonvektion und/oder Infrarotstrahlung die Dentalrestaurationsteile erwärmt, so dass die Dentalrestaurationsteile in oder auf einem Suszeptor aus einem hochwärmeleitfähigen Material, insbesondere aus Siliziumkarbid, aufgenommen werden.

Demgegenüber liegt der Erfindung die Aufgabe zugrunde, einen Brennofen oder Pressofen für Dentalrestaurationsteile gemäß dem Oberbegriff von Anspruch 1 zu schaffen, der eine größere Unabhängigkeit gegenüber der unterschiedlichen Größe von Dentalrestaurationsteilen bei optimierter Zykluszeit im Vergleich mit der Qualität bietet.

Diese Aufgabe wird erfindungsgemäß durch Anspruch 1 bzw. 13 gelöst. Vorteilhafte Weiterbildungen ergeben sich aus den Unteransprüchen.

Erfindungsgemäß ist es vorgesehen, den Boden des Brennraums des erfindungsgemä-βen Dentalbrenn- oder -Pressofens mit einem Wärmeleitkörper auszustatten, der eine vergleichsweise hohe Wärmeleitfähigkeit aufweist. Diese kann 100 W/mK betragen, aber auch 150 W/mK, 200 W/mK oder sogar 250 W/mK.

Der Wärmeleitkörper weist bevorzugt einen runden Aufbau aus, ist also in der Draufsicht kreisförmig oder ellipsenförmig, wobei es sich versteht, dass grundsätzlich auch eine hieran angenäherte Form wie eine sechseckige oder achteckige Form mit abgerundeten Ecken möglich ist. Seine Dicke ist deutlich geringer als sein Durchmesser und beträgt bevorzugt etwa ein Fünfzehntel des Durchmessers, wobei der grundsätzliche Dickenbereich zwischen der Hälfte des Durchmessers und einem Hundertstel des Durchmessers beträgt und der bevorzugte Dickenbereich zwischen einem Fünftel und einem Dreißigstel des Durchmessers.

Diese Form wird hier als Scheibenform bezeichnet, was jedoch nicht ausschließt, dass Vorsprünge und/oder Vertiefungen für die Aufnahme des Wärmeleitkörpers im Boden des Brennraums einerseits und für die Aufnahme einer Pressmuffel oder Dentalformteilen auf den Wärmeleitkörper andererseits vorgesehen sind.

Erfindungsgemäß verhindern diese Formabweichungen von einer flachen Form nicht den guten Wärmeübergang zum Wärmeleitkörper hin, aber auch vom Wärmeleitkörper weg. Der Wärmeübergang zum Wärmeleitkörper hin erfolgt überwiegend durch Strahlungswärme, die von der Heizeinrichtung des Ofens abgegeben wird.

Es ist erfindungsgemäß aber auch nicht ausgeschlossen, dass durch Konvektion und/ oder durch Wärmeleitung, also thermischen Kontakt, ein Wärmeübergang zwischen der Heizeinrichtung und dem Wärmeleitkörper stattfindet. Es ist auch möglich, zur Verbesserung der thermischen Ankopplung einen speziellen Wärmeüberleitkörper anzubringen, dessen Zweck darin besteht, die Wärmeübertragung von der Heizeinrichtung zu dem Wärmeleitkörper zu verbessern. Dieser Körper könnte dann kreisringförmig sein und entweder an der Haube des Ofens angebracht sein oder an dem Wärmeleitkörper selbst und kann aus einem Material bestehen, dass die gleiche gute Wärmeleitfähigkeit wie der Wärmeleitkörper hat.

Erfindungsgemäß besonders günstig ist es, dass eine elektrische Heizung im Boden des Brennraums gleichsam simuliert wird, ohne dass elektrische Heizelemente dort vorhanden sein müssten. Hierdurch ist der erfindungsgemäße Ofen kurzschlußsicher, auch bei dem üblichen feuchten Abwischen des Brennraumbodens. Überraschend ist die Zykluszeit deutlich geringer, denn eine Erwärmung der Pressmuffel oder des Dentalrestaurationsteils von unten ist thermisch wesentlich günstiger als eine rein seitliche Erwärmung, wie sie bei den Hauben-Brennöfen üblich ist, und bei dem erfindungsgemäßen Brennofen oder Pressofen zusätzlich vorgesehen ist.

Der heiße Wärmeleitkörper überträgt seine Wärmeenergie, deutlich effizienter auf die Pressmuffel oder das Dentalrestaurationsteil. Dies liegt nicht nur daran, dass Konvektionswärme nach oben strömt, sondern insbesondere auch an dem direkten thermischen Kontakt. Erfindungsgemäß ist der Wärmeleitkörper wesentlich näher an der erfindungsgemäßen Ofenhaube als die Pressmuffel oder das Dentalrestaurationsteil, da der Durchmesser größer ist als beispielsweise ein Pressmuffeldurchmesser. Durch das typische Schwenken der Ofenhaube bei deren Entfernen ist es nicht möglich, die Pressmuffel so groß zu machen, dass sie den gesamten Brennraum ausfüllt. Zudem müssen für unterschiedlich große Dentalrestaurationsteile unterschiedliche Pressmuffelgrößen verwendet werden können, was bedingt, dass auch recht kleine Pressmuffeln in einem Ofen mit einem Brennraumdurchmesser von beispielsweise dem Dreifachen des Pressmuffeldurchmessers verwendet werden müssen. Die Wärmeübertragung auf solche Pressmuffeln erfolgte bislang rein durch Strahlungsvvärme von den seitlich angebrachten Heizspiralen der Widerstandsheizung.

Erfindungsgemäß sind derartige Heizspiralen der Widerstands-Heizeinrichtufig ebenfalls vorgesehen. Die unterste Wendel der Heizspirale ist jedoch recht nahe benachbart an dem Wärmeleitkörper, so dass die dort emittierte Wärme sich zum großen Teil auf diesen überträgt.

Der erfindungsgemäße Wärmeleitkörper ist bevorzugt aus Siliziumkarbid und dunkel oder sogar schwarz. Er absorbiert auftreffende Wärmestrahlung besonders gut im Vergleich zu den üblicherweise verwendeten Isolationsmaterialien, Schamotten oder keramischen Bauteilen aus Al₂O₃ oder ähnlichem die im Bodenbereich des Dentalofens eingesetzt werden und im Gegensatz zum SiC typischerweise weiß sind. Analoges gilt auch für die verwendeten Brenngutträger zum Halten der dentalen Restaurationsteilen aus Cordierit oder die aus Gips bestehenden Pressmufteln.

Nachdem der erfindungsgemäße Wärmeleitkörper - wie vorstehend erläutert - flach ist, ist es auch möglich, bestehende Öfen hiermit nachzurüsten, um die Zykluszeit zu verbessern. Viele Öfen besitzen oft eine separate und entnehmbare Bodenplatte aus dem selben Isolationsmaterial oder einer Schamotte, welche für die Temperaturisolierung im Ofen verwendet wird, da der Boden eines dentalen Brennofens stark mechanisch belastet ist und auch leicht verschmutzbar ist. Diese kann ebenfalls durch einen erfindungsgemäßen Wärmeleitkörper substituiert werden.

Um den Wärmeübergang zwischen dem Wärmeleitkörper einerseits und dem Dentalrestaurationsteil oder der Pressmuffel, in der das Dentalrestaurationsteil erzeugt werden soll, andererseits zu verbessern, und auch um sicherzustellen, dass das Dentalrestaurationsteil und die Pressmuffel gut zentriert sind, kann der Wärmeleitkörper mit einer für die Pressmuffel passgenauen Ausnehmung versehen sein, einer Ausnehmung oder einer Aussparung also, die die Pressmuffel umgibt, und auch an den Seitenwänden der Aussparung auch für Wärmeübertragung durch direkten Kontakt mit der Seitenwand der Pressmuffel sorgt. Auch im Boden des Pressofens kann eine entsprechende Ausnehmung vorgesehen sein, in die der Wärmeleitkörper zentriert wird. Dies dient auch dazu einen sicheren Stand der einzustellenden Objekte zu gewährleisten,

Erfindungsgemäß besonders günstig ist es, dass der Wärmeleitkörper in dem heißen Brennofen verbleiben kann, wenn die Pressmuffel oder das Dentalrestaurationsteil fertiggestellt ist. Soweit der Wärmeleitkörper durch das Einsetzen der Pressmuffel abgekühlt worden ist, nimmt er dann in der Brennpause wieder die Temperatur des Ofeninnenraums an und steht für die direkte und dennoch gleichförmige, aber rasche Erwärmung des Dentalrestaurationsteils oder der Pressmuffel sogleich wieder zur Verfügung.

Erfindungsgemäß sind durch diese Maßnahme die Temperaturgradienten während des Brenn- oder Presszykluses im Arbeitsbereich deutlich abgesenkt oder aber die Brenn- und Presszykluszeit können bei gleichbleibenden Temperaturgradienten verkürzt werden. Es versteht sich, dass es günstig ist, wenn die Pressmuffel oder aber auch ein Dentalrestaurationsteil großflächigen Kontakt, beispielsweise Über mehrere cm², mit dem Wärmeleitkörper haben. Die Wärmeübertragung durch Wärmeleitung ist dann besonders gut.

Typischerweise ist die Wärmeübertragung per Wärmeleitung fester Körper deutlich besser ais die Wärmeübertragung durch Konvektion oder Strahlung.

Es ist besonders günstig, wenn Wärmeleitkörper sich unter Bildung eines Spalts begrenzten Ausmaßes bis zur Wand des Brennraums erstreckt, also, ohne dass ein Kontakt zwischen Wärmeleitkörper und Wand des Brennraums besteht. Die Wand des Brennraums ist in die Ofenhaube eingearbeitet, und die Ofenhaube ist typischerweise beweglich gegenüber dem Boden des Brennraums, der auf dem Ofenunterteil ausgebildet ist. Auf diese Weise lässt sich die Ofenhaube gegenüber dem Boden des Brennraums und dem Wärmeleitkörper frei in beliebiger Weise bewegen, auch wenn der Wärmeleitkörper sich durch die Erwärmung deutlich ausdehnt. Nachdem dem unteren Ende der Ofenhaube benachbart die unterste Wendel oder Wicklung der Heizspirale der Heizeinrichtung angebracht ist, erfolgt eine besonders gute Wärmeübertragung über den Spalt hinweg auf den Wärmeleitkörper.

Es versteht sich, dass die genaue Ausgestaltung des Spalts und der relativen Abmessungen zwischen der Ofenhaube an ihrem unteren Rand einerseits und des Wärmeleitkörpers andererseits in weiten Bereichen an die Erfordernisse angepasst werden können. So kann beispielsweise der Wärmeleitkörper an seinem Umfang etwas erhöht werden, um eine noch weiter verbesserte Wärmeaufnahme zu ermöglichen, oder aber um den Arbeitsbereich für das Einstellen von dentalen Restaurationsteilen anzuzeigen und einzugrenzen.

Erfindungsgemäß besonders günstig ist es, wenn als Heizeinrichtung eine elektrische Widerstandsheizung oder eine sonstige thermische Heizung eingesetzt wird, da hier gleichmässig Wärmeabstrahlende Flächen realisiert werden können. Dies wird jedoch dadurch eingeschränkt, dass insbesondere dort wo die Bestückung stattfindet, d.h. der Zugang zum Ofen erfolgt, eine Trennung in z.B. ein Oberteil oder ein Unterteil eines dentalen Ofens vorliegt. Will man mehrere Flächen beheizen, bedeutet dies den Einbau mehrerer von einander getrennt anschliessbarer Heizelemente und damit einen zusätzlichen technischen Aufwand und damit einhergehend höheren Kosten.

Bekanntlich nimmt die Wärmeübertragung über Strahlung bei Temperaturen grösser 600°C überproportional im Vergleich zur Wärmeleitung zu. Diese Wärmestrahlung wird jedoch in Richtung des Bodens des Ofens, auf welchem Brenngutträger oder Pressmuffeln eingestellt werden, durch eben diese eingestellten Träger und Pressmuffeln unterbunden. Die Beheizung und Erwärmung der Bodenplatte wird, wenn diese aus den Üblichen Isolationsmaterialien oder Keramikmaterialien aufgebaut ist, dadurch drastisch reduziert bzw. verhindert

Erfindungsgemäß ist es nun sehr vorteilhaft, dass die überstehende Fläche des Wärmeleitkörpers dennoch sehr gut die noch ankommende Wärmestrahlung aufnehmen kann und Aufgrund seiner sehr hohen Wärmeleitung, diese dann rasch und gut unter den eingestellten Träger in einem Brennofen oder die eingestellte Pressmuffel in einem Pressofen weiter leilet.

Wesentlich in diesem Zusammenhang ist auch, dass der dadurch der Temperaturgradient innerhalb des Brennraums aber insbesondere am eingestellten Objekt dadurch erfindungsgemäß geringer ist. Erfindungsgemäß wird durch den Wärmeleitkörper die gleichmässige Erwärmung des Dentalrestaurationsteils wesentlich mitbestimmt. Der Warmeleitkörper ist insofern eine indirekte Heizeinrichtung. Er erzeugt einen Wärmeschleier und eine gleichmäßige Wärmeverteilung, und zwar sowohl in vertikaler als auch in radialer Richtung des Brennraums. Dies bedeutet, dass die lsothermen, die die Temperaturverteilung im Brennraum wiedergeben, mit der Erfindung wesentlich weiter voneinander beabstandet sind, oder, andersherum betrachtet, dass die Temperaturgradienten oder der Temperaturgradient im Brennraum wesentlich geringer ist.

Erfindungsgemäß ist es besonders günstig, dass der Wärmeleitkörper zur Temperaturvergleichmäßigung sowohl in radialer Richtung als auch gleichsam als Folge hiervon in vertikaler Richtung beiträgt. Während der Temperaturgradient erfindungsgemäß günstigerweise bei aufgeheiztem Ofen, also im normalen Betrieb von aufeinander folgenden Brennzyklen, innerhalb des Wärmeleitkörpers bevorzugt weniger als 5 Grad beträgt, ist es auch günstig, dass auch in der Aufheizphase, also wenn der zunächst auf Raumtemperatur befindliche Ofen beispielsweise auf die Brenntemperatur von 1200°C aufgeheizt wird, die Temperaturdifferenz innerhalb des Wärmoleitkörpers weniger als 20 Grad beträgt. Überraschend lassen sich hierdurch heiße Zonen und kalte Zonen entweder vollständig vermeiden, oder die Neigung zu deren Bildung deutlich verringern.

Erfindungsgemäß besonders günstig ist es, wenn für den Wärmeteitkörper ein Körper aus Siliziumkarbid verwendet wird. Reines Siliziumkarbid hat eine Wärmeleitfähigkeit von ca. 350 W/mK, aber auch die mit technischem Siliziumkarbid erzielbaren Wärmeleitfähigkeiten von knapp 150 W/mK wirken erfindungsgemäß günstig. Der Wärmeleitkörper kann entweder als kompakter formgepresster Körper realisiert sein oder er kann eine beliebigen anderen, grundsätzlich flachen Aufbau haben. Eine Scheibenform lässt sich beispielsweise auch dann realisieren, wenn der Wärmeleitkörper nicht massiv aufgebaut ist. Beispielsweise kann er mehrteilig aus radialen "Kuchenstücken" oder aus aufeinandergelegten Scheiben aufgebaut sein.

Erfindungsgemäß ist der Wärmeleitkörper auch aufgrund seiner eigenen hohen Wärmeleitfähigkeit besonders temperaturschockbeständig, herausnehmbar und separat zu reinigen. In diesem Zusammenhang kann es günstig sein, dass insbesondere Siliziumkarbid eine sehr hohe Härte besitzt und dadurch ein sehr mechanisch sehr hoch belastbares Bauteil darstellt. Dies ermöglicht beispielsweise sogar eine Reinigung durch Sandstrahlen, um starke anhaftende Verschmutzungen leicht und rückstandsfrei zu entfernen. Dies ist für sonst üblicherweise verwendete keramische Bauteile, insbesondere wenn diese aus dem selben Material wie für die Isolierung der Brennkammer verwendet, undenkbar.

Es ist jedoch auch möglich, insbesondere bei Brennöfen, einen separaten Brenngutträger vorzusehen, der auf dem erfindungsgemäßen Wärmeleitkörper aufgelegt ist und auf welchem die brennenden Dentalrestaurationsmaterialien aufgestellt sind. Der Brenngutträger kann aus einem beliebigen, hierfür geeigneten Material bestehen, beispielsweise ebenfalls aus Siliziumkarbid, so dass insofern ebenfalls eine Temperaturvergleichmäßigung im Hinblick auf die gute Wärmeleitfähigkeit dieses Materials erzeugt wird, oder aber beispielsweise aus Cordierit oder SiNi. Vorzugsweise sollte die Masse dieses Trägers im Vergleich zum Wärmeleitkörper gering sein, um den Vorteil des Wärmeleitkörpers optimal zu nutzen. Dem Träger selbst kommt dann eigentlich nur mehr die Aufgabe eines Transfersystems zum Be- und Entladen des dentalen Ofens zu.

Erfindungsgemäß ist es vorgesehen, dass der Wärmeleitkörper auf seiner Oberseite eine Stellfläche bildet und als Träger wenigstens ein Restaurationsteil , einen Brenngutträger mit wenigstens einem Restaurationsteil oder eine Pressmuffel abstützt.

Erfindungsgemäß besonders günstig ist es vorgesehen, dass der Wärmeleitkörper im Wesentlichen scheibenförmig, insbesondere kreis-scheibenförmig ausgebildet ist und das Restaurationsteil oder die Pressmuffel radial überragt.

Erfindungsgemäß besonders günstig ist es vorgesehen, dass der Wärmeleitkörper von der Seitenwand des Brennraumes unter Bildung eines Spalts beabstandet ist, dessen Breite insbesondere weniger als ein Drittel und besonders bevorzugt ein Viertel bis ein Zwanzigstel seines Durchmessers beträgt.

Erfindungsgemäß besonders günstig ist es vorgesehen, dass der Wärmeleitkörper zentral auf dem Boden des Brennraums angeordnet ist und einen Rand aufweist, zwischen welchem und einer umlaufenden Seitenwand des Brennraums ein Spalt als Ringspalt besteht, dessen Breite über seinen Verlauf gleichbleibend ist.

Erfindungsgemäß besonders günstig ist es vorgesehen, dass der Wärmeleitkörper eine Höhe von einem Zwanzigstel bis zu einem Drittel, insbesondere etwa ein Zehntel, seines Durchmessers aufweist.

Erfindungsgemäß besonders günstig ist es vorgesehen, dass der Wärmeleitkörper aus Siliziumkarbid SIC, Aluminiumnitrid AIN oder Molybdän besteht.

Erfindungsgemäß besonders günstig ist es vorgesehen, dass der Boden des Brennraums Wärmedämmmaterial und insbesondere Schamott aufweist.

Erfindungsgemäß besonders günstig ist es vorgesehen, dass der Boden eine zentrale Vertiefung aufweist, in welcher der Wärmeleitkörper insbesondere teilweise versenkt, aufgenommen ist.

Erfindungsgemäß besonders günstig ist es vorgesehen, dass die Heizeinrichtung - insbesondere ausschließlich - im Bereich der Seitenwand der Brennkammer angeordnet ist und dass der Boden des Brennraums frei von einer Heizung ist.

Erfindungsgemäß besonders günstig ist es vorgesehen, dass der Wärmeleitkörper in Form eines wabenförmigen Trägers ausgebildet ist.

Erfindungsgemäß besonders günstig ist es vorgesehen, dass die Waben des wabenförmigen Trägers nach der Art eines Vierkantrohres ausgebildet sind, das sich vertikal erstreckt, und dass der Wärmeleitkörper in der Draufsicht gitterförmig ausgebildet ist.

Erfindungsgemäß besonders günstig ist es vorgesehen, dass vor dem Wärmebehandlungsprozess in diesem Brennraum insbesondere auf dessen Boden ein Wärmeleitkörper (50)mit einer spezifischen Wärmeleitfähigkeit von mindestens 100 W/mK eingebracht wird und dass ein Wärmebehandlungszyklus für das Herstellen des dentalen Restaurationsteils begonnen wird, wenn die Brennkammer und der Wärmeleitkörper eine vorgegebene Bereitschaftstemperatur, d.h. Starttemperatur erreicht haben.

Erfindungsgemäß besonders günstig ist es vorgesehen, dass der Wärmeleitkörper auf den Boden des Brennraums eines herkömmlichen Dentalbrenn- oder -Pressofens (10)aufgelegt wird und dass dann die Pressmuffel auf den Wärmeleitkörpergestellt wird, bevor der Brennzyklus und/oder der Presszyklus stattfindet.

Erfindungsgemäß besonders günstig ist es vorgesehen, dass für den Wärmeleitkörper ein Material verwendet wird, das härter als das Unterteil des Dentalbrenn- oder -Pressofens ist.

Weitere Vorteile, Einzelheiten und Merkmale ergeben sich aus der nachfolgenden Beschreibung mehrerer Ausführungsbeispiele der Erfindung anhand der Zeichnung.

Es zeigen:
- Fig.1: eine schematische Schnittansicht eines erfindungsgemäßen Dentalpressofens in einer Ausführungsform;
- Fig. 2: eine schematische Schnittansicht eines erfindungsgemäßen Dentalbrennofens in einer Ausführungsform;
- Fig. 3: eine schematische perspektivische Ansicht eines Details eines erfindungsgemäßen Dentalbrennofens;
- Fig.4: die Wärmeverteilung im Brennraum eines Dentalofens gemäß dem Stand der Technik; und
- Fig. 5: die schematische Wärmeverteilung im Brennraum eines erfindungsgemäßen Dentalofens.

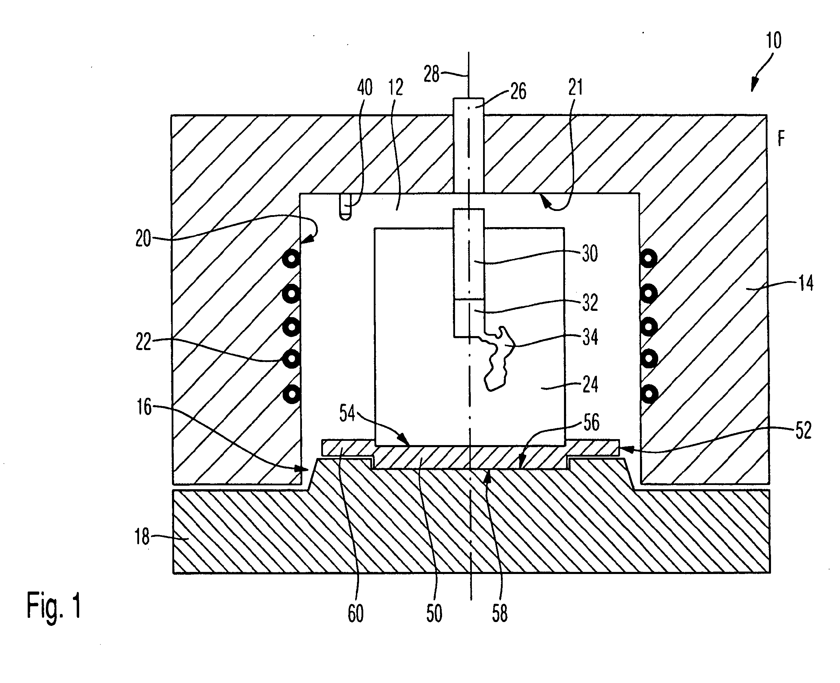

In Fig. 1 ist ein Dentalofen 10 schematisch dargestellt. Der Ofen 10 weist einen Brennraum 12 auf, der nach oben und zu den Seiten hin von einer Ofenhaube 14 umgeben ist. Unterhalb des Brennraums 12 erstreckt sich ein Boden 16 des Brennraums als Teil eines Ofenunterteils 18.

In an sich bekannter Weise ist die Ofenhaube 14 von dem Unterteil 18 abhebbar, wobei sich eine schwenkbare Lagerung der Ofenhaube 14 bewährt hat.

Ofenhaube 14 und Unterteil 18 bestehen zu einem großen Teil aus einem wärmedämmenden Material wie Schamott.

Eine Seitenwand 20 des Brennraums 12 ringförmig umgebend ist eine Heizeinrichtung 22 vorgesehen. Die Heizeinrichtung 22 ist als thermische Heizung ausgebildet, bevorzugt als Widerstands-Heizeinnchtung. Grundsätzlich versteht es sich, dass anstelle dessen auch eine beliebige andere thermische Heizeinrichtung eingesetzt werden kann.

Im dargestellten Ausführungsbeispiel weist die Heizeinrichtung in an sich bekannter Weise Übereinander liegende Wendeln eines Widerstandsdrahts auf, die in nicht dargestellten und zum Brennraum hin offenen Gängen ruhen und sich im wesentlichen über die ganze Höhe des Brennraums, oder aber - wie hier dargestellt - über etwas mehr als die Hältte des Brennraums erstrecken.

Auch wenn in Fig. 15 Wendeln dargestellt sind, versteht es sich, dass anstelle dessen auch eine beliebige andere Anzahl von Wendeln möglich ist, und insbesondere eine 6. Wendel in der Darstellung unterhalb der in Fig. 1 untersten Wendel vorgesehen sein kann.

Die von der Heizeinrichtung 22 abgegebene Wärmestrahlung dient dazu, den Brennraum 12 zu erhitzen, um ein Dentalrestaurationsteil formen zu können. Hierzu ist eine Pressmuffel 24 vorgesehen, die zentral in dem Brennraum 12 angeordnet ist, und zwar mit deutlichem Abstand zu der Seitenwand 20 des Brennraums. Über den Durchmesser des Brennraums betrachtet, nimmt die Pressmuffel 24 etwa die innere Hälfte ein. Ein Abstand muss insofern stets gewährleistet sein, denn durch die Schwenkbewegung beim Öffnen der Haube 14 bestände sonst die Gefahr, dass die Pressmuffel 24 von der Haube 14 mitgenommen wird.

In an sich bekannter Weise weist die obere Wand der Haube 14 eine Durchtrittsausnehmung auf. In der Durchtrittsausnehmung ist ein Pressstempel 26 geführt, der vertikal beweglich ist und in der Achse 28 des Brennraums verläuft. Der Pressstempel 26 ist dafür bestimmt, auf einen Rohling oder Grünling 30 aus Dentalmaterial zu drücken. Hierzu weist die Pressmuffel) 24 einen zylindrischen Vorpresskanal 32 auf. Über einen kleinen Verbindungskanal steht der Vorpresskanal in Verbindung mit einem Formraum 34, dessen Form nach der Art einer Matritze die spätere Form des Dentalrestaurationsteils bestimmt.

Im Betrieb des Dentalpressofens 10 wird der Pressstempel 26 nach Einsetzen der Pressmuffel 24 mit dem Rohling 30 zunächst abgesenkt, so dass auch der Vorpresskanal 32 vollständig von dem Rohling 30 ausgefüllt ist. Es wird dann zugewartet, bis die Temperatur des Rohlings 30 und der Pressmuffel 24 sich soweit der Temperatur im Brennraum 12 angeglichen hat, dass das Dentalmaterial flüssig oder zumindest viskos wird. Es wird dann Druck auf den Pressstempel 26 von oben ausgeübt, der den ausgeübten Druck auf den Rohling 30 weitergibt. Nach dessen Verflüssigung dringt das Dentalmaterial des Rohlings 30 in den Verbindungskanal und dann in den Formraum 34 ein, bis der Formraum 34 vollständig ausgefüllt ist. Es versteht sich, dass anstelle des hier als einzigem dargestellten Formraums 34 auch eine Mehrzahl von Formräumen an radial anderen Stellen der Pressmuffel 24 vorgesehen sein können, die je über separate Verbindungskanäle mit dem Vorpresskanal 32 verbunden sind.

Um die Verzögerung bis zur Erweichung des Dentalmaterials gering zu halten, wird die Pressmuffel 24 vor dem eigentlichen Pressvorgang üblicherweise in einem sogenannten Vorwärmofen auf eine Vorwärmtemperatur gebracht, beispielsweise auf 850°. Die Nenntemperatur in dem Brennraum 12 hängt stark von dem verwendeten und zu verarbeitenden Dentalmaterial und der Masse der verwendeten Pressmuffel ab; während bei Leuzit-Keramik zum Beispiel eine Temperatur von 1070° erforderlich ist, ist die Brenntemperatur von Lithiumdisilikat wesentlich geringer. Die Temperatur und auch der Temperaturverlauf wird über einen Temperatursenscr 40 erfasst, wobei zusätzlich auch die Presskraft des Pressstempels 26 und auch die Bewegung des Pressstempels 26 beim Pressen erfasst und gesteuert wird.

Die Pressmuffel 24 besteht typischerweise aus Gips oder gipsähnlichen Massen, um die erforderliche Formtreue auch bei starker Temperaturerhöhung zu gewährleisten. Um die Wärmeaufnahme zu verbessern, ist es auch vorgeschlagen worden, die Farbpigmente zu der Masse hinzuzugeben, die die Absorption der Wärmestrahlung der Heizeinrichtung 22 der Pressmuffel verbessern sollen. Hierunter leidet jedoch leider die Formtreue.

Um diesem Übelstand abzuhelfen, ist es erfindungsgemäß vorgesehen, einen Wärmeleitkörper 50 vorzusehen, der sich nach der Art einer Scheibe den Boden 16 des Brennraums abdeckend oder nahezu abdeckend erstreckt und an seinem Aussenrand 52 der unteren Wendel der Heizeinrichtung 22 mindestens benachbart ist. Mit benachbart ist hier ein Abstand von wenigen Zentimetern, beispielsweise 1 bis max. 3 cm gemeint, während der Abstand zwischen der Heizeinrichtung 22 und der Aussenseite der Pressmuffel 24 durchaus 3 cm beträgt oder bei kleinen Pressmuffeln auch wesentlich mehr betragen kann.

Zwischen dem Aussenrand 52 des Wärmeleitkörpers 50 und der Seitenwand 20 der Ofenhaube 14 besteht ein Spalt von beispielsweise 1 cm, wobei die Ofenhaube 14 über den Wärmeleitkörper 50 hinaus nach unten reicht. Dementsprechend ist der Boden 16 des Brennraums 12 dort abgesenkt und im übrigen erhaben.

Der Wärmeleitkörper 50 verbleibt auch bei entfernter Pressmuffel im Ofen 10. Dementsprechend ist er auf der Nenntemperatur, wenn die Pressmuffel 24 eingesetzt wird. Der Wärmeleitkörper 50 ist in Kontakt mit der gesamten Unterseite der Pressmuffel 24. Der heiße Wärmeleitkörper 50 überträgt die von ihm gespeicherte und weiter auf ihn übertragene Wärme von unten in die Pressmuffel 24 hinein, so dass sie sich wesentlich rascher erwärmt und eine bessere Temperaturvergleichmäßigung entsteht, als bei den herkömmlichen Öfen ohne Wärmeleitkörper 50 am Boden des Brennraums.

In dem dargestellten Ausführungsbeispiel weist der Wärmeleitkörper 50 auch noch eine napfförmige Vertiefung auf, in die die Pressmuffel 24 genau hineinpasst, dies dient im wesentlichen einer zentrischen Führung der eingestellten Pressmuffel.

Es versteht sich, dass bei unterschiedlichen Pressmuffelgrößen auch zusätzliche kleine Anpassringe eingesetzt werden können, die konzentrisch in die Vertiefung 54 des Wärmeleitkörpers 50 einlegbar sind, so dass stets nicht nur eine verbesserte Wärmeübertragung zwischen Wärmeleitkörper 50 und Pressmuffel 24 erfolgt, sondern auch eine Zentrierung der Pressmuffel 24, damit sichergestellt ist, dass der Pressstempel 26 genau mit dem Vorpresskanal 32 der Pressmuffel 24 fluchtet.

Um die Zentrierung zu gewährleisten, weist der Boden 16 des Brennraums 12 eine entsprechende Vertiefung 56 auf, in die ein kreisrunder Vorsprung 58 des Wärmeleitkörpers 50 genau passt.

Auch wenn Brennraum, Prossmuffel und Wärmeleitkörper als kreisrunde Elemente beschrieben sind, versteht es sich, dass anstelle dessen auch eine elliptische Ausgestaltung möglich ist, oder beispielsweise auch eine sechseckige oder achteckige. In dem dargestellten Ausführungsbeispiel ist der Wärmeleitkörper 50 aus technischem Siliziumkarbid und schwarz. Ein Seitenflansch 60 des Wärmeleitkörpers, 50 überragt radial nach aussen die Pressmuffel 24. Dieser Seitenflansch 60 ist stets der Wärmeemission der Heizeinrichtung 22 unterworfen und gibt die aufgenommene Wärmestrahlung an den Wärmeleitkörper 50 im übrigen und damit an die Pressmuffel 24 weiter.

Der Wärmeleitkörper 50 weist im dargestellten Ausführungsbeispiel eine Wärmeleitfähigkeit von 120 W/mK auf.

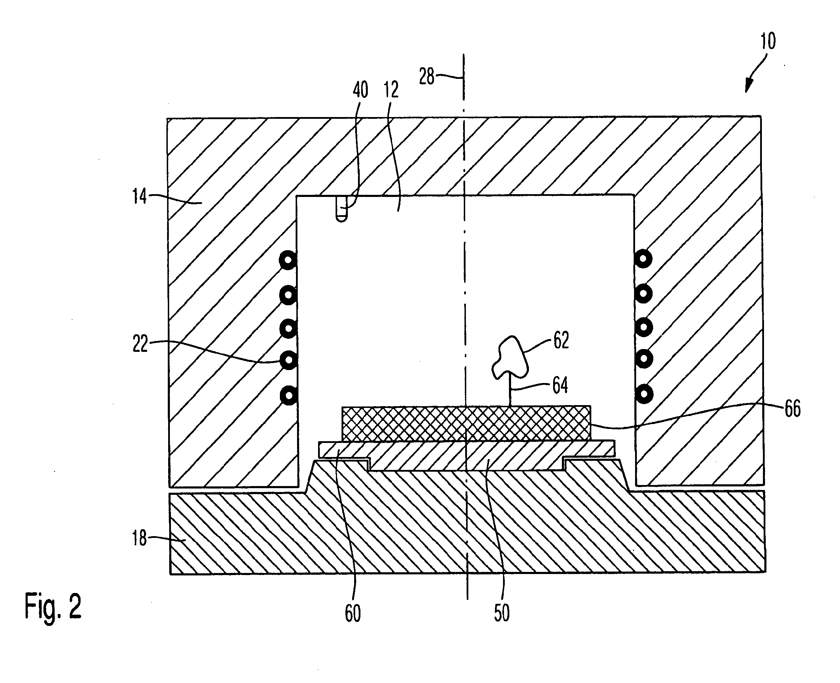

Eine modifizierte Ausgestaltung eines Ofens ist aus Fig. 2 ersichtlich. Bei dem dort dargestellten Dentalbrennofen 10 ist in ähnlicher Weise, wie es anhand von Fig. 1 dargestellt wurde, eine Ofenhaube 14 vorgesehen, die gegenüber einem Unterteil 18 des Ofens 10 beweglich gelagert ist Gleiche Bezugszeichen weisen hier und auch in den weiteren Figuren auf gleiche oder ähnliche Teile hin und bedürfen keiner weiteren Erläuterung.

In der Ausführungsform gemäß Fig. 2 wird ein Dentalrestaurationsteil 62 gebrannt, das über einen Stützstab 64 auf einem Brenngutträger 66 abgestützt ist. Der Brenngutträger 66 seinerseits liegt vollflächig auf dem Wärmeleitkörper 50 auf. In diesem Ausführungsbeispiel ist die Oberseite des Wärmeleitkörpers 50 plan, und der Durchmesser des Brenngutträgers 66 beträgt etwa 80% des Durchmessers des Brennraums 12. Demgegenüber beträgt der Durchmesser des Wärmeleitkörpers 50 etwa 92% des Durchmessers des Brennraums 12. Auch hier wird die in dem Wärmeleitkörper 50 gespeicherte Wärme und die von dem Flansch 60 aufgenommene Wärme von unten in den Brenngutträger 66 eingeleitet, so dass eine Erwärmung des Dentalrestaurationsteils 62 nicht nur von den Seiten über die direkte Wärmestrahlung der Heizeinrichtung 22, sondern zusätzlich auch von unten erfolgt.

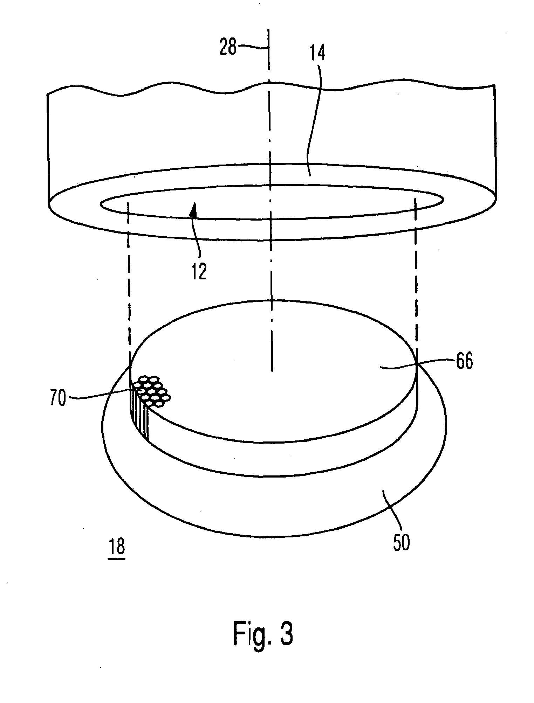

Eine mögliche Ausgestaltung eines Brenngutträgers 66 ist aus Fig. 3 schematisch ersichtlich. Fig. 3 zeigt außerdem, dass durch Anheben der Ofenhaube 14 sich eine Schrägstellung zwischen dem Unterteil 18 des Brennofens und der Haube 14 ergibt. Der Brenngutträger 66 weist eine Waben- oder Gitterstruktur 70 auf, die aus Fig. 3 schematisch ersichtlich ist. Die Waben verlaufen in der dargestellten Ausführungsform vertikal.

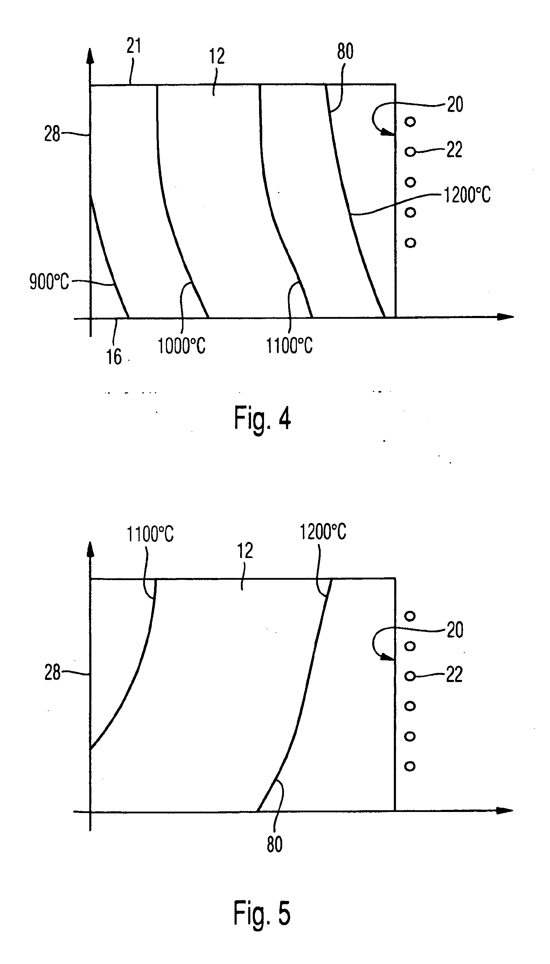

In Fig. 4 ist der Verlauf der Isothermen 80 bei einem herkömmlichen Ofen dargestellt. Es ist der Temperaturverlauf über die Höhe des Brennraums dargestellt, also vom Boden 16 l Deckenwand 21. Die horizontale Koordinate beginnt bei der Achse 28 und endet bei der Seitenwand 20 des Brennraums. Die Darstellung stellt schematisch den Temperaturverlauf bei einem rasch erwärmten Ofen dar, in den die Pressmuffel noch nicht eingesetzt ist.

Es ist ersichtlich, dass es an den oberen äußeren Ecken, also beim Zusammentreffen der Deckenwand 21 mit der Seitenwand 20, am heißesten ist, im dargestellten Beispiel die Temperatur also höher als die 1200°-Isotherme ist, während es in der unteren Mitte, also an der Stelle, an der die Achse 28 den Boden 16 trifft, am kühlsten ist, kälter als die 900°-Isotherme. Insofern besteht gerade während des raschen Aufheizens ein signifikantes Temperaturgefälle, und die dem einzusetzenden Dentalrestaurationsteil benachbarte Stelle ist am kältesten.

in Fig. 5 ist demgegenüber der gleiche Temperaturverlauf mit eingesetztem Wärmeleitkörper 50 in erfindungsgemäßer Form dargestellt. Auch hier liegt der radial äußere Teil des Brennraums 12 jenseits der 1200°-Isotherme, denn dort ist die Heizeinrichtung 22 vorgesehen. Die eingeleitete Wärmestrahlung wird jedoch zum großen Teil von der schwarzen und gut wärmeleitenden scheibenförmigen) Platte, die den Wärmeleitkörper 50 bildet, aufgenommen. Hierdurch ist es dort sogar etwas wärmer als oberhalb der Platte oder am oberen Ende des Brennraums 12. Dies kommt in der der Fig. 4 entgegengesetzten Neigung der Isothermen zum Ausdruck, die sich dementsprechend von links unten nach rechts oben erstrecken, also nicht von rechts unten nach links oben wie in Fig. 4.

Zudem ist der Abstand der Isothermen bei der erfindungsgemäßen Ausgestaltung gemäß Fig. 5 wesentlich größer als bei herkömmlichen Öfen gemäß Fig. 4, was bedeutet, dass eine signifikant verbesserte Temperaturvergleichmäßigung vorliegt. Der Ort, an dem später das Dentalrestaurationsteil eingebracht ist, liegt etwa auf der 1100°-Isotherme, so dass der Temperaturgradient insgesamt in dem dargestellten Aufheizzustand auf ein Drittel vermindert ist.

## Patentansprüche

1. Dentalbrenn- oder -pressofen für die Herstellung wenigstens eines dentalen Restaurationstelles (62), mit einem Brennraum (12), der von einer Widerstands-Heizeinrichtung, beheizbar ist und einen Wärmeleitkörper (50) mit einer spezifischen Wärmeleitfähigkeit von mindestens 100 W/mK aufweist, wobei der Brennraum (12) nach oben und zu den Seiten hin von einer Ofenhaube (14) umgeben ist und sich unterhalb des Brennraums (12) ein Boden (16) des Brennraums (12) als Teil eines Ofenunterteils (18) erstreckt, wobei die Ofenhaube (14) von dem Ofenunterteil (18) abhebbar ist, und wobei die Widerstands-Heizeinrichtung ausschließlich im Bereich einer Seitenwand (20) der Brennkammer angeordnet ist, und dass auf dem Boden des Brennraumes (12) der Wärmeleitkörper (50) angeordnet ist, wobei der Wärmeleitkörper (50) auf seiner Oberseite eine Stellfläche bildet und als Träger wenigstens ein Restaurationsteil (62), einen Brenngutträger (66) mit wenigstens einem Restaurationsteil (62) oder eine Pressmuffel (24) abstützt.

2. Ofen nach einem der vorhergehenden Ansprüche, **dadurch gekennzeichnet, dass** der Wärmeleitkörper (50) im Wesentlichen scheibenförmig, insbesondere kreis-scheibenförmig ausgebildet ist und das Restaurationsteil (62) oder die Pressmuffel (24) radial überragt.

3. Ofen nach einem der vorhergehenden Ansprüche, **dadurch gekennzeichnet, dass** der Wärmeleitkörper (50) von der Seitenwand (20) des Brennraumes (12) unter Bildung eines Spalts beabstandet ist, dessen Breite insbesondere weniger als ein Drittel und besonders bevorzugt ein Viertel bis ein Zwanzigstel seines Durchmessers beträgt.

4. Ofen nach einem der vorhergehenden Ansprüche, **dadurch gekennzeichnet, dass** der Wärmeleitkörper (50) zentral auf dem Boden (16) des Brennraums (12) angeordnet ist und einen Rand (52) aufweist, zwischen welchem und einer umlaufenden Seitenwand (20) des Brennraums (12) ein Spalt als Ringspalt besteht, dessen Breite über seinen Verlauf gleichbleibend ist.

5. Ofen nach einem der vorhergehenden Ansprüche, **dadurch gekennzeichnet, dass** der Wärmeleitkörper (50) eine Höhe von einem Zwanzigstel bis zu einem Drittel, insbesondere etwa ein Zehntel, seines Durchmessers aufweist.

6. Ofen nach einem der vorhergehenden Ansprüche, **dadurch gekennzeichnet, dass** der Wärmeleitkörper (50) aus Siliziumkarbid SIC, Aluminiumnitrid AIN oder Molybdän besteht.

7. Ofen nach einem der vorhergehenden Ansprüche, **dadurch gekennzeichnet, dass** der Boden (16) des Brennraums (12) Wärmedämmmaterial und insbesondere Schamott aufweist.

8. Ofen nach einem der vorhergehenden Ansprüche, **dadurch gekennzeichnet, dass** der Boden (16) eine zentrale Vertiefung aufweist, in welcher der Wärmeleitkörper (50) insbesondere teilweise versenkt, aufgenommen ist.

9. Ofen nach einem der vorhergehenden Ansprüche, **dadurch gekennzeichnet, dass** der Wärmeleitkörper (50) in Form eines wabenförmigen Trägers ausgebildet ist.

10. Ofen nach Anspruch 9, **dadurch gekennzeichnet, dass** die Waben des wabenförmigen Trägers nach der Art eines Vierkantrohres ausgebildet sind, das sich vertikal erstreckt, und dass der Wärmeleitkörper (50) in der Draufsicht gitterförmig ausgebildet ist.

11. Verfahren zum Betreiben eines Dental-Brennofens oder-Pressofens (10), mit welchem wenigstens ein dentales Restaurationsteil (62) hergestellt wird, wobei der Ofen einen Brennraum (12) aufweist, der von einer Widerstands-Heizeinrichtung (22) beheizbar ist, **dadurch gekennzeichnet, dass** vor dem Wärmebehandlungsprozess in diesem Brennraum (12), auf dessen Boden (16), ein Wärmeleitkörper (50)mit einer spezifischen Wärmeleitfähigkeit von mindestens 100 W/mK eingebracht wird und dass ein Wärmebehandlungszyklus für das Herstellen des dentalen Restaurationsteils (62) begonnen wird, wenn die Brennkammer und der Wärmeleitkörper (50) eine vorgegebene Bereitschaftstemperatur, also eine Starttemperatur, erreicht haben.

12. Verfahren nach Anspruch 11, **dadurch gekennzeichnet, dass** der Wärmeleitkörper (50) auf den Boden (16) des Brennraums (12) eines herkömmilchen Dentalbrenn- oder-Pressofens (10) aufgelegt wird und dass dann die Pressmuffel (24) auf den Wärmeleitkörper(50) gestellt wird, bevor der Brennzyklus und/oder der Presszyklus stattfindet.

13. Verfahren nach einem der Ansprüche 11 oder 12, **dadurch gekennzeichnet, dass** durch eine Durchtrittsausnehmung in der oberen Wand der Ofenhaube 14) ein Pressstempel (26) in der Achse (28) des Brennraums (12) geführt wird, wobei der Pressstempel (26) auf einen Rohling oder Grünling (30) aus Dentalmaterial in einem zylindrischen Vorpresskanal (32) der Pressmuffel (24) drückt, und wobei der Vorpresskanal (32) über einen kleinen Verbindungskanal in Verbindung mit einem Formraum (34) steht, durch den die spätere Form des Dentalrestaurationsteils bestimmt wird.

14. Verfahren nach einem der Ansprüche 11 bis 13, **dadurch gekennzeichnet, dass** für den Wärmeleitkörper (50) ein Material verwendet wird, das härter als das Unterteil des Dentalbrenn- oder -Pressofens (10) ist.

## Claims

1. A dental firing or press furnace for the production of at least one dental restoration part (62), said furnace comprising a firing space (12) that is heatable with the aid of a resistance heating device (22), and a heat-conducting element (50) having a specific thermal conductivity of at least 100 W/mK, wherein the firing space (12) upwardly and to the sides is surrounded by a furnace hood (14) and below the firing space (12) a floor (16) of the firing space (12) extends as part of a furnace base (18), wherein said furnace hood (14) may be lifted from the furnace base (18), and wherein the resistance heating device is arranged exclusively in the region of a side wall (20) of the firing space (12), and wherein on the floor of the firing space (12) the heat-conducting element (50) is arranged, wherein the heat-conducting element (50) forms a footprint on its upper side, and as a carrier supports at least a restoration part (62), a firing tray (66) with at least one restoration part (62), or a press muffle (24).

2. The furnace as claimed in claim 1, **characterized in that** the heat-conducting element (50) is substantially formed in a disk-shaped manner, in particular in a circular disk-shaped manner, and radically extends past the restoration part (62) or the press muffle (24).

3. The furnace as claimed in one of the preceding claims, **characterized in that** the heat-conducting element (50) is spaced apart from the side wall (20) of the firing space (12) thereby forming a gap whose width in particular is less than one third and particularly preferred is one fourth to one twentieth of its diameter.

4. The furnace as claimed In one of the preceding claims, **characterized in that** the heat-conducting element (50) is centrally located on the floor (16) of the firing space (12) and comprises an edge or rim (52), wherein between the edge or rim and a circumferential side wall (20) of the firing space (12) a gap exists as an annular gap whose width remains constant throughout its run.

5. The furnace as claimed in one of the preceding claims, **characterized in that** the heat-conducting element (50) comprises a height of one twentieth to one third, In particular approximately one tenth of its diameter.

6. The furnace as claimed in one of the preceding claims, **characterized in that** the heat-conducting element (50) comprises silicon carbide SIC, aluminum nitride AIN or molybdenum.

7. The furnace as claimed in one of the preceding claims, **characterized in that** the floor (16) of the firing space (12) comprises a thermal insulation material and in particular fireclay.

8. The furnace as claimed in one of the preceding claims, **characterized in that** the floor (16) comprises a central recess, in which the heat-conducting element (50) is accommodated in particular in a partially ground-recessed manner.

9. The furnace as claimed in one of the preceding claims, **characterized in that** the heat-conducting element (50) is shaped as an alveolar or honeycombed carrier.

10. The furnace as claimed in claim 9, **characterized in that** the honeycombs of the alveolar or honeycombed carrier are shaped according to the type of a square pipe that extends vertically, and that the heat conducting element (50) is formed into lattice shape in the plan or top view.

11. A method for operating a dental firing or press furnace (10), with the aid of which at least one dental restoration part (62) is produced, said furnace comprising a firing space (12) that is heatable by means of a heating device (22), **characterized in that** prior to the heat treatment process in said firing space (12) on the floor (16) thereof, a heat-conducting element (50) having a specific thermal conductivity of at least 100 W/mK, is introduced and that a heat treatment cycle for the production of the dental restoration part (62) is started when the firing space and the heat-conducting element (50) have reached a preset operating or stand-by temperature, that Is to say a start temperature.

12. The method according to claim 11, **characterized in that** the heat-conducting element (50) is placed on the floor (16) of the firing space (12) of a conventional dental firing or press furnace (10) and that the press muffle (24) is then placed on top of the heat-conducting element (50) before the firing and/or press cycle takes place.

13. The method according to claim 11 or 12, **characterized in that** a press plunger (26) is guided in the axis (28) of the firing space (12) through a through-recess within the upper wall of the furnace hood (14), wherein said press plunger (26) presses on a blank or green body (30) made from a dental material in a cylindrical pre-press channel (32) of the press muffle (24), and wherein said pre-press channel (32) via a small connection channel is in contact with a mould cavity (34) by means of which the later shape of the dental restoration part is determined.

14. The method according to claim 11 to 13, **characterized in that** a material is used for the heat-conducting element (50) that is harder than the bottom or base part of the dental firing or press furnace (10).

## Revendications

1. Four dentaire de cuisson ou de pressage pour la réalisation d'au moins une pièce de reconstitution (62) dentaire, comportant une chambre de combustion (12), qui est propre à être chauffée par un dispositif de chauffage à résistance et comporte un corps thermoconducteur (50) avec une conductibilité thermique spécifique de 100 W/mK au moins, ladite chambre de combustion (12) étant entourée vers le haut et sur les côtés par une cloche du four (14), et en dessous de la chambre de combustion (12) s'étend un fond (16) de la chambre de combustion (12) formant une partie de la partie inférieure du four (18), la cloche du four (14) pouvant être soulevée de la partie inférieure du four (18), et le dispositif de chauffage à résistance étant disposé exclusivement dans la zone d'une paroi latérale (20) de la chambre de combustion, et le corps thermoconducteur (50) étant disposé sur le fond de la chambre de combustion (12), ledit corps thermoconducteur (50) formant sur sa face supérieure une surface de pose et, en tant que support d'au moins une pièce de reconstitution (62), supportant un support de cuisson (66) avec au moins une pièce de reconstitution (62) ou un moufle de pressage (24).

2. Four selon la revendication précédente, **caractérisé en ce que** le corps thermoconducteur (50) est réalisé sensiblement en forme de plateau, en particulier en forme de plateau circulaire, et s'avance radialement au-delà de la pièce de reconstitution (62) ou du moufle de pressage (24).

3. Four selon l'une quelconque des revendications précédentes, **caractérisé en ce que** le corps thermoconducteur (50) est écarté de la paroi latérale (20) de la chambre de combustion (12) en formant une fente, dont la largeur correspond en particulier à moins d'un tiers et, encore mieux, à un quart jusqu'à un vingtième de son diamètre.

4. Four selon l'une quelconque des revendications précédentes, **caractérisé en ce que** le corps thermoconducteur (50) est disposé au centre sur le fond (16) de la chambre de combustion (12) et comporte un bord (52), entre lequel et une paroi latérale (20) périphérique de la chambre de combustion (12) existe une fente en forme de fente annulaire dont la largeur est identique sur tout son tracé.

5. Four selon l'une quelconque des revendications précédentes, **caractérisé en ce que** le corps thermoconducteur (50) a une hauteur qui correspond à un vingtième jusqu'à un tiers, en particulier sensiblement un dixième, de son diamètre.

6. Four selon l'une quelconque des revendications précédentes, **caractérisé en ce que** le corps thermoconducteur (50) est réalisé en carbure de silicium SIC, en nitrure d'aluminium AIN ou en molybdène.

7. Four selon l'une quelconque des revendications précédentes, **caractérisé en ce que** le fond (16) de la chambre de combustion (12) comporte un matériau thermoisolant et en particulier une argile réfractaire.

8. Four selon l'une quelconque des revendications précédentes, **caractérisé en ce que** le fond (16) comporte un creux central, dans lequel est reçu le corps thermoconducteur (50) en étant, en particulier, partiellement enfoncé.

9. Four selon l'une quelconque des revendications précédentes, **caractérisé en ce que** le corps thermoconducteur (50) est réalisé sous la forme d'un support alvéolaire.

10. Four selon la revendication 9, **caractérisé en ce que** les alvéoles du support alvéolaire sont réalisées à la manière d'un tube rectangulaire qui s'étend verticalement, et **en ce que** le corps thermoconducteur (50), sur une vue de dessus, est réalisé en forme de grille.

11. Procédé permettant l'exploitation d'un four dentaire de cuisson ou de pressage (10), avec lequel est réalisé au moins une pièce de reconstitution (62) dentaire, ledit four comportant une chambre de combustion (12), qui est propre à être chauffée par un dispositif de chauffage à résistance (22), **caractérisé en ce que**, avant le processus de traitement thermique dans cette chambre de combustion (12), un corps thermoconducteur (50) avec une conductibilité thermique spécifique de 100 W/mK au moins est introduit sur le fond (16) de ladite chambre de combustion, et **en ce qu'**un cycle de traitement thermique pour la réalisation de la pièce de reconstitution (62) dentaire commence lorsque la chambre de combustion et le corps thermoconducteur (50) ont atteint une température de préparation, à savoir une température de démarrage, prédéfinie.

12. Procédé selon la revendication 11, **caractérisé en ce que** le corps thermoconducteur (50) est posé sur le fond (16) de la chambre de combustion (12) d'un four dentaire de cuisson ou de pressage (10) classique et **en ce que**, ensuite, le moufle de pressage (24) est posé sur le corps thermoconducteur (50) avant que le cycle de cuisson et/ou le cycle de pressée commencent.

13. Four selon la revendication 11 ou 12, **caractérisé en ce qu'**un poinçon de pressage (26) est guidé dans l'axe (28) de la chambre de combustion (12) à travers un évidement de passage dans la paroi supérieure de la cloche du four (14), ledit poinçon de pressage (26) poussant sur une ébauche ou un compact vert (30) en matériau dentaire dans un canal de pressage préliminaire (32) cylindrique du moufle de pressage (24), et ledit canal de pressage préliminaire (32) est situé au-dessus d'un petit canal de liaison communiquant avec une chambre de formage (34), par laquelle est déterminée la forme ultérieure de la pièce de reconstitution dentaire.

14. Procédé selon l'une quelconque des revendications 11 à 13, **caractérisé en ce que** pour le corps thermoconducteur (50) on utilise un matériau qui est plus dur que la partie inférieure du four dentaire de cuisson ou de pressage (10).
